(19) Europäisches Patentamt
European Patent Office
Office européen des brevets

(11) **EP 2 738 277 A1**

(12) **EUROPEAN PATENT APPLICATION**
published in accordance with Art. 153(4) EPC

(43) Date of publication:
**04.06.2014 Bulletin 2014/23**

(21) Application number: **12819761.3**

(22) Date of filing: **25.07.2012**

(51) Int Cl.:
*C22C 38/00* (2006.01)   *C22C 38/44* (2006.01)
*C22C 38/50* (2006.01)   *C23C 22/34* (2006.01)
*C23F 17/00* (2006.01)   *C23G 1/08* (2006.01)
*C25F 1/06* (2006.01)   *H01M 8/02* (2006.01)
*C23F 1/00* (2006.01)   *H01M 8/10* (2006.01)

(86) International application number:
**PCT/JP2012/004736**

(87) International publication number:
**WO 2013/018320 (07.02.2013 Gazette 2013/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2011   JP 2011166580**

(71) Applicant: **JFE Steel Corporation
Tokyo 100-0011 (JP)**

(72) Inventors:
 • **MAKIISHI, Noriko
   Tokyo 100-0011 (JP)**
 • **NORO, Hisato
   Tokyo 100-0011 (JP)**

 • **ISHIKAWA, Shin
   Tokyo 100-0011 (JP)**
 • **IDE, Shinsuke
   Tokyo 100-0011 (JP)**
 • **ISHII, Tomohiro
   Tokyo 100-0011 (JP)**
 • **NAGOSHI, Masayasu
   Tokyo 100-0011 (JP)**

(74) Representative: **Stebbing, Timothy Charles
   Haseltine Lake LLP
   Lincoln House, 5th Floor
   300 High Holborn
   London WC1V 7JH (GB)**

(54) **STAINLESS STEEL FOR FUEL CELL SEPARATOR**

(57)    Stainless steel for fuel cell separators are provided which exhibit excellent contact resistance characteristics and practical utility. The stainless steel contains C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities. According to X-ray photoelectron spectroscopy, the surface of the stainless steel contains fluorine and provides a 3.0 or higher ratio of the total of atomic concentrations of Cr and Fe in other than the metallic forms calculated from data resulting from the separation of peaks of Cr and Fe into metallic peaks and peaks other than the metallic peaks to the total of atomic concentrations of Cr and Fe in the metallic forms calculated from data resulting from the separation of peaks of Cr and Fe into metallic peaks and peaks other than the metallic peaks.

FIG. 5

**Description**

Technical Field

The present invention relates to a stainless steel for fuel cell separators which is excellent in corrosion resistance and in contact resistance characteristics and contact resistance retaining performance.

Background Art

From the viewpoint of environmental conservation, there has recently been ongoing development of fuel cells that are excellent in electric power generation efficiency and do not emit carbon dioxide. A fuel cell produces electricity by the reaction of hydrogen with oxygen. The basic structure thereof is a sandwich structure that is composed of an electrolyte membrane, namely, an ion-exchange membrane, two electrodes (a fuel electrode and an air electrode), hydrogen and oxygen (air) diffusion layers, and two separators. Fuel cells developed so far have some types in accordance with the electrolytes used such as phosphoric acid fuel cells, molten sodium carbonate fuel cells, solid oxide fuel cells, alkaline fuel cells and solid polymer fuel cells.

Of the above fuel cells, solid polymer fuel cells outperform other types of fuel cells such as molten sodium carbonate fuel cells and phosphoric acid fuel cells in terms of such characteristics as (1) a markedly low operating temperature of about 80°C, (2) reduced weight and size of cell bodies, and (3) a short transient time, high fuel efficiency and high output density. Thus, solid polymer fuel cells are one of the most attractive fuel cells today for use as power sources aboard electric vehicles as well as compact distributed power sources for home use and mobile use.

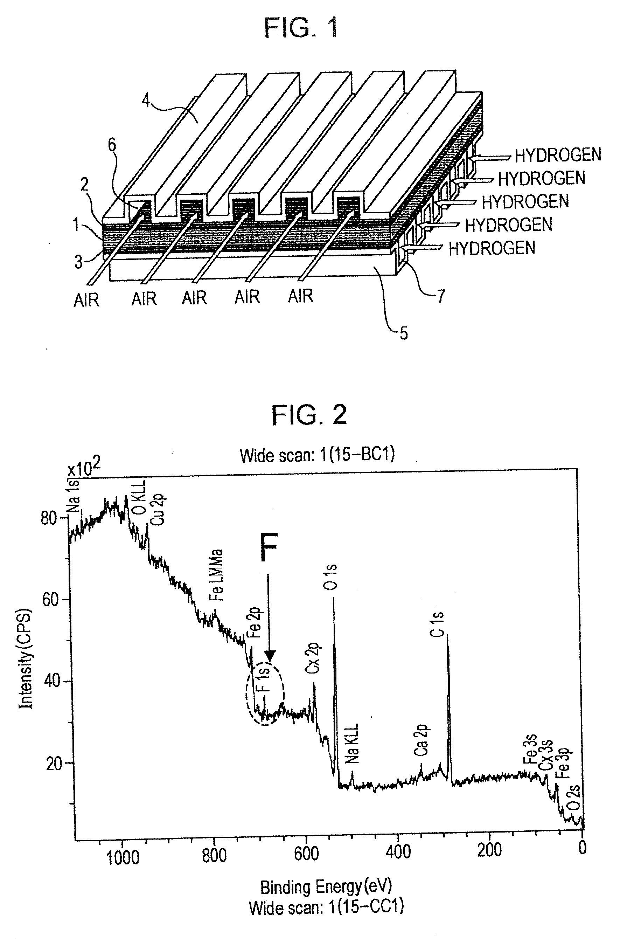

Solid polymer fuel cells are based on the principle of obtaining electricity from hydrogen and oxygen via polymer membranes. A structure thereof is illustrated in Fig. 1. A membrane-electrode assembly (MEA, having a thickness of several tens to several hundreds of $\mu$m) 1 is a combination of a polymer membrane and an electrode material such as carbon black carrying a platinum catalyst and disposed on the front and back sides of the membrane. This MEA is sandwiched between gas diffusion layers 2 and 3 such as carbon cloth sheets and separators 4 and 5, thereby forming a unit cell capable of generating an electromotive force between the separators 4 and 5. Here, the gas diffusion layers are frequently integrated with the MEA. When used, several tens to several hundreds of these unit cells are connected in series to form a fuel cell stack.

Separators are required to function as partitions separating unit cells and also as (1) conductors carrying electrons generated, (2) channels for oxygen (air) and hydrogen (air channels 6 and hydrogen channels 7 in Fig. 1), and (3) channels for water and exhaust gas (air channels 6 and hydrogen channels 7 in Fig. 1).

As described above, the practical use of solid polymer fuel cells requires separators which exhibit excellent durability and conductivity. Solid polymer fuel cells that are in practical use at present utilize separators made of carbonaceous materials such as graphite. Various other materials such as titanium alloys are under consideration. However, the carbon separators have drawbacks in that the separators are easily broken by impact, miniaturization is difficult, and the formation of channels incurs high processing costs. In particular, the cost problems are the greatest obstacle to the wide spreading of fuel cells. Thus, attempts have been made to replace carbonaceous materials by metal materials, in particular stainless steel.

Patent Literature 1 discloses a technique in which a metal that is easily passivated to form a passivation film is used as a separator. However, the formation of a passivation film results in an increase in contact resistance and leads to a decrease in electric power generation efficiency. Thus, problems with these metal materials have been indicated such as higher contact resistance and inferior corrosion resistance as compared to carbonaceous materials.

In order to solve these problems, Patent Literature 2 discloses a technique in which the surface of a metallic separator such as SUS304 is plated with gold to reduce contact resistance and ensure high output. However, thin gold plating is accompanied by a difficulty of preventing the occurrence of pinholes. On the other hand, thick gold plating adds costs.

Patent Literature 3 discloses a remedy in which separators with improved conductivity are obtained by dispersing carbon powders on ferritic stainless steel substrates. However, the use of carbon powders is a reasonably costly surface treatment for separators. Further, a problem has been pointed out in which such surface-treated separators markedly decrease corrosion resistance in the case where defects such as scratches are caused during assembling.

Under the circumstances described above, the present inventors have filed Patent Literature 4 drawn to a technique in which a stainless steel material is used as such and the surface configuration is controlled so as to satisfy both contact resistance and corrosion resistance. Patent Literature 4 is directed to a stainless steel sheet characterized in that the average spacing between local peak tops in a surface roughness curve is not more than 0.3 $\mu$m, this configuration achieving a contact resistance of not more than 20 m$\Omega\cdot$cm$^2$. Although this technique has made it possible to provide stainless steel materials as fuel cell separator materials, further improvements in contact resistance characteristics are desirable from the viewpoint of fuel cell design and a stable contact resistance of not more than 10 m$\Omega\cdot$cm$^2$

is demanded.

In fuel cells, positive electrodes (air electrodes) which are subjected to high potential tend to increase contact resistance due to surface degradation. Thus, it is necessary that separators retain a contact resistance of not more than 10 mΩ·cm$^2$ for a long time in a service environment.

Citation List

Patent Literature

PTL 1: Japanese Unexamined Patent Application Publication No. 8-180883
PTL 2: Japanese Unexamined Patent Application Publication No. 10-228914
PTL 3: Japanese Unexamined Patent Application Publication No. 2000-277133
PTL 4: Japanese Unexamined Patent Application Publication No. 2005-302713

Summary of Invention

Technical Problem

The present invention has been made in view of the circumstances described above. It is therefore an object of the invention to provide stainless steel for fuel cell separators excellent in contact resistance characteristics and contact resistance retaining performance. Solution to Problem

The present inventors carried out extensive studies directed to improving the contact resistance characteristics of stainless steel for fuel cell separators and to retaining the contact resistance for a long time. As a result of the studies, the present inventors have found that the contact resistance characteristics and the contact resistance retaining performance are improved by configuring the stainless steel such that the steel surface includes fluorine and shows peak intensities of Cr and Fe according to X-ray photoelectron spectroscopy (hereinafter, sometimes referred to as XPS) that provide at least a certain value of the intensity ratio of the peaks assigned to forms other than the metallic forms to the peaks assigned to the metallic forms.

The present invention is based on the above findings. Features of the invention are as follows.

[1] A stainless steel for fuel cell separators wherein the stainless steel contains, by mass, C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities, and wherein according to X-ray photoelectron spectroscopy, the surface of the stainless steel contains fluorine and satisfies the following relation:

$$(Cr + Fe) \text{ in other than metallic forms}/(Cr + Fe) \text{ in}$$
$$\text{metallic forms} \geq 3.0$$

wherein (Cr + Fe) in other than metallic forms indicates the total of atomic concentrations of Cr and Fe in other than the metallic forms calculated from data resulting from the separation of peaks of Cr and Fe into metallic peaks and peaks other than the metallic peaks, and (Cr + Fe) in metallic forms indicates the total of atomic concentrations of Cr and Fe in the metallic forms calculated from the data resulting from the separation of the peaks of Cr and Fe into metallic peaks and peaks other than the metallic peaks.

[2] The stainless steel for fuel cell separators described in [1], wherein the stainless steel further contains not more than 1.0% by mass of a total of one or more of Nb, Ti and Zr.

Advantageous Effects of Invention

The stainless steel for fuel cell separators according to the present invention exhibit excellent and long-lasting contact resistance characteristics and have excellent practical utility. The inventive stainless steel as separators replace conventional expensive carbon and gold plating to enable the provision of inexpensive fuel cells and to promote the spread of fuel cells.

Brief Description of Drawings

[Fig. 1] Fig. 1 is a schematic view illustrating a basic structure of a fuel cell.
[Fig. 2] Fig. 2 is a wide scan spectrum according to XPS measurement with respect to the surface of a sample according to the invention.
[Fig. 3] Fig. 3 is an Fe 2p spectrum according to XPS measurement with respect to the surface of a sample according to the invention.
[Fig. 4] Fig. 4 is a Cr 2p spectrum according to XPS measurement with respect to the surface of a sample according to the invention.
[Fig. 5] Fig. 5 illustrates a relationship between the (Cr + Fe) in other than metallic forms/(Cr + Fe) in metallic forms ratio and the increase in contact resistance between before and after a durability test.

Description of Embodiments

Hereinbelow, the present invention will be described in detail.
First, stainless steel of interest in the invention will be described.
The stainless steel used as the material in the invention is not particularly limited, and any types of steels may be used as long as the stainless steel has corrosion resistance required in an operating environment for fuel cells. However, the stainless steel needs to contain not less than 16 mass% Cr in order to ensure basic corrosion resistance. If the Cr content is less than 16 mass%, the stainless steel cannot endure prolonged use as separators. The Cr content is preferably not less than 18 mass%. If the Cr content exceeds 40 mass%, toughness may be lowered at times due to the precipitation of $\sigma$ phase. Thus, the Cr content is specified to be not more than 40 mass%.
The chemical composition is described below. The unit "%" used for the contents of components indicates mass% unless otherwise mentioned.

C: not more than 0.03%

The reaction of carbon with chromium in stainless steel precipitates chromium carbide in the grain boundary, resulting in a decrease in corrosion resistance. Thus, a lower C content is more preferable. A marked decrease in corrosion resistance is avoided when the C content is not more than 0.03%. The C content is preferably not more than 0.015%.

Si: not more than 1.0%

Silicon is an effective element for deoxidation and is added at a stage of smelting of stainless steel. However, excessive addition causes hardening of the stainless steel sheet and decreases ductility. Thus, the Si content is specified to be not more than 1.0%, and more preferably not less than 0.01% and not more than 0.6%.

Mn: not more than 1.0%

Manganese combines to sulfur that has been inevitably mixed in the stainless steel and thereby effectively decreases the amount of sulfur dissolved in the stainless steel. Thus, this element is effective for suppressing the segregation of sulfur at the grain boundary and for preventing cracking of the steel sheet during hot rolling. However, adding manganese in excess of 1.0% does not substantially provide a corresponding increase in the effects. On the contrary, such excessive addition increases costs. Thus, the Mn content is specified to be not more than 1.0%.

S: not more than 0.01%

Sulfur combines to manganese to form MnS and thereby lowers corrosion resistance. Thus, the content of this element is preferably small. A marked decrease in corrosion resistance is avoided when the S content is not more than 0.01%. Thus, the S content is specified to be not more than 0.01%.

P: not more than 0.05%

Phosphorus causes a decrease in ductility and therefore the content thereof is desirably small. A marked decrease in ductility is avoided when the P content is not more than 0.05%. Thus, the P content is specified to be not more than 0.05%.

Al: not more than 0.20%

Aluminum is used as a deoxidizing element. Excessive addition of this element causes a decrease in ductility. Thus, the Al content is specified to be not more than 0.20%.

N: not more than 0.03%

Nitrogen is an effective element for suppressing the localized corrosion such as crevice corrosion of stainless steel. However, the addition of nitrogen in excess of 0.03% requires long time at a stage of smelting of stainless steel, resulting in a decrease in productivity and a decrease in the formability of steel. Thus, the N content is specified to be not more than 0.03%.
One or more of Ni: not more than 20%, Cu: not more than 0.6% and Mo: not more than 2.5%
Ni: not more than 20%
Nickel is an element that stabilizes the austenite phase and is added when austenitic stainless steel is to be produced. If the Ni content exceeds 20%, such excessive consumption of nickel increases costs. Thus, the Ni content is specified to be not more than 20%.

Cu: not more than 0.6%

Copper is an effective element for improving the corrosion resistance of stainless steel. However, the addition in excess of 0.6% not only results in a decrease in hot workability and a decrease in productivity but also increases costs due to excessive addition of copper. Thus, the Cu content is specified to be not more than 0.6%.

Mo: not more than 2.5%

Molybdenum is an effective element for suppressing the localized corrosion such as crevice corrosion of stainless steel. However, the addition in excess of 2.5% not only results in marked embrittlement of stainless steel and a decrease in productivity but also increases costs due to excessive consumption of molybdenum. Thus, the Mo content is specified to be not more than 2.5%.
One or more of Nb, Ti and Zr in total of not more than 1.0%
In the invention, one or more of niobium, titanium and zirconium may be added in addition to the aforementioned elements in order to improve grain boundary corrosion resistance. However, ductility is lowered if the total thereof exceeds 1.0%. Further, such excessive addition of these elements increases costs. Thus, titanium, niobium and zirconium, when added, are preferably present in a total content of not more than 1.0%.
The balance is iron and inevitable impurities.
Next, there will be described characteristics to be met by the inventive stainless steel for separators.
When the surface of the inventive stainless steel is analyzed by X-ray photoelectron spectroscopy, fluorine is detected and the following relation is satisfied:

$$\text{(Cr + Fe) in other than metallic forms/(Cr + Fe) in metallic forms} \geq 3.0$$

wherein (Cr + Fe) in other than metallic forms indicates the total of atomic concentrations of Cr and Fe in other than the metallic forms calculated from data resulting from the separation of peaks of Cr and Fe into metallic peaks and peaks other than the metallic peaks, and (Cr + Fe) in metallic forms indicates the total of atomic concentrations of Cr and Fe in the metallic forms calculated from the data resulting from the separation of the peaks of Cr and Fe into metallic peaks and peaks other than the metallic peaks.
Fig. 2 shows a wide scan XPS spectrum according to XPS measurement with respect to the surface of stainless steel according to the invention. From Fig. 2, the quantitative determination involving relative sensitivity factors provides values of not less than 0.1 at%, and a clear detection of fluorine is shown.

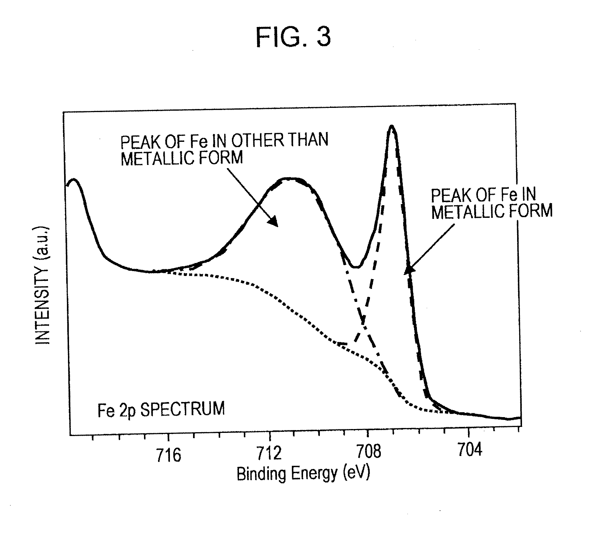

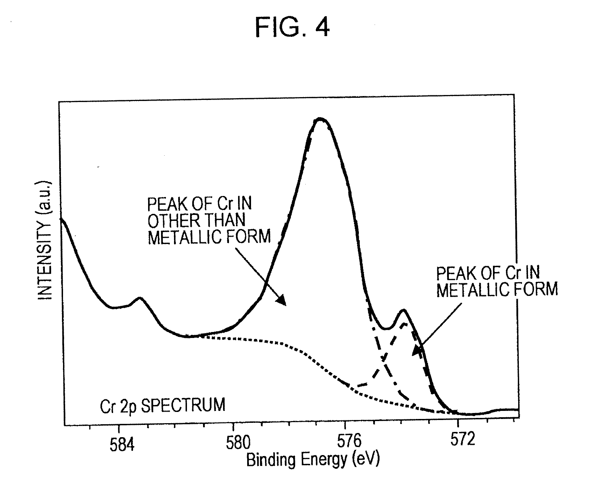

Fig. 3 illustrates an XPS Fe 2p spectrum, and Fig. 4 illustrates a Cr 2p spectrum. In both Figs. 3 and 4, the peaks are shown to be separated into a metallic peak and a peak other than the metallic peak. In both cases of Fe and Cr, the metallic peak is detected at the lowest binding energy and can be distinguished from the peak assigned to forms other than the metallic form (for example, compounds). This distinguishability allows the nonmetallic peak and the metallic peak to be separated from each other and be expressed as a ratio. In detail, the amounts (the atomic concentrations) of Cr and Fe were determined using relative sensitivity factors, and the respective peaks were separated into individual peaks; from the obtained results, a ratio was calculated of the total of the atomic concentrations of Cr and Fe obtained from the film, namely, the total of the atomic concentrations of Cr and Fe in other than the metallic forms, to the total of the atomic concentrations of Cr and Fe obtained from the metal portion, namely, the total of the atomic concentrations of Cr and Fe in the metallic forms. Separately, a durability test was carried out, and the contact resistance values were measured before and after the test and the increase was calculated. In the durability test, a sample was held in a pH 3 sulfuric acid solution for 24 hours under conditions of 800 mV vs. SHE and 80°C.

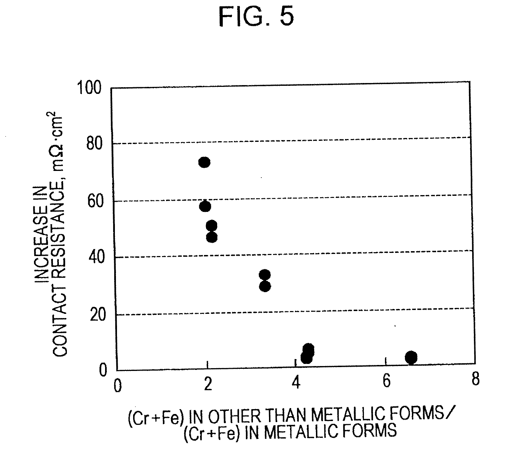

Fig. 5 illustrates a relationship between the (Cr + Fe) in other than metallic forms/(Cr + Fe) in metallic forms ratio and the increase in contact resistance between before and after the durability test. This ratio is a ratio of the total of the atomic concentrations of Cr and Fe in other than the metallic forms to the total of the atomic concentrations of Cr and Fe in the metallic forms, according to XPS measurement with respect to the surface of stainless steels confirmed to contain fluorine on the surface by X-ray photoelectron spectroscopy. Fig. 5 illustrates that the increase in contact resistance is small when fluorine is detected on the surface and the (Cr + Fe) in other than metallic forms/(Cr + Fe) in metallic forms ratio is at least a certain value. As shown in Fig. 5, the (Cr + Fe) in other than metallic forms/(Cr + Fe) in metallic forms ratio has a good relation with the increase in contact resistance. It has been illustrated that the (Cr + Fe) in other than metallic forms/(Cr + Fe) in metallic forms ratio should be suitably not less than 4.0 in order to suppress the increase in contact resistance, which is a measure of durability obtained by the durability test, to not more than 10 mΩ·cm² (20 kgf/cm²), and should be suitably not less than 3.0 in order to suppress the increase in contact resistance to not more than 30 mΩ·cm² (20 kgf/cm²).

Based on the above results, the present invention provides that when the surface of the stainless steel is analyzed by X-ray photoelectron spectroscopy, fluorine is detected and the relation described below is satisfied. By controlling the (Cr + Fe) in other than metallic forms/(Cr + Fe) in metallic forms ratio to be not less than 3.0, the increase in contact resistance can be suppressed to not more than 30 mΩ·cm² (20 kgf/cm²) and the contact resistance before the durability test can be reduced to not more than 10 mΩ·cm².

$$\text{(Cr + Fe) in other than metallic forms/(Cr + Fe) in metallic forms} \geq 3.0$$

Preferably,

$$\text{(Cr + Fe) in other than metallic forms /(Cr + Fe) in metallic forms} \geq 4.0.$$

The peaks assigned to forms other than the metallic forms, and the peaks assigned to the metallic forms may be separated from each other by removing the background of the spectrum according to a Sherly method and performing least square peak fitting with Gaussian peaks.

The reasons are unknown why the contact resistance is lowered and why the increase in contact resistance between before and after the durability test is suppressed to a small value according to the configuration in which fluorine is present on the surface and the (Cr + Fe) in other than metallic forms/(Cr + Fe) in metallic forms ratio is controlled to be not less than 3.0. However, these effects are probably associated with the facts that fluorine easily forms stable compounds together with iron and chromium and that the (Cr + Fe) in other than metallic forms/(Cr + Fe) in metallic forms ratio corresponds to the thickness of a surface oxide film and the inventive configuration indicates that the thickness of the formed oxide layer is relatively large.

Fluorine may be attached to the surface by methods such as immersion in hydrofluoric acid. The (Cr + Fe) in other than metallic forms/(Cr + Fe) in metallic forms ratio may be regulated to fall in the inventive range by controlling the conditions in treatments such as acid immersion treatment after annealing. In an exemplary case of a treatment in which the steel is electrolytically treated in an acidic solution and is thereafter immersed in an acidic solution, the inventive range may be achieved by changing the treatment time and the temperature of the treatment liquid. As an example, the (Cr + Fe) in other than metallic forms/(Cr + Fe) in metallic forms ratio may be increased by extending the treatment time.

The stainless steel for fuel cell separators according to the invention may be produced by any conventional methods without limitation. Preferred production conditions are described below.

A slab conditioned to have a preferred chemical composition is heated to a temperature of not less than 1100°C, thereafter hot rolled, annealed at temperatures of 800 to 1100°C, and subsequently subjected to repeated cold rolling and annealing to give a stainless steel. The sheet thickness of the obtained stainless steel sheet is suitably about 0.02 to 0.8 mm. After finish annealing, the steel sheet is preferably subjected to a pretreatment (electrolytic treatment or acid immersion) and thereafter to acidizing. As an example of electrolytic conditions, the electrolytic treatment may be performed in a 3% sulfuric acid ($H_2SO_4$) bath at 2 A/dm$^2$ and 55°C for 30 seconds. As an example of the acid immersion, the steel sheet may be immersed in a HCl:$H_2O$ = 1:3 (by volume) liquid mixture at 55°C for 30 seconds.

As an example of the acidizing, the steel sheet may be immersed in a solution mixture of 5% hydrofluoric acid and 1% nitric acid at 55°C for 40 seconds to 120 seconds.

EXAMPLE 1

Steels having a chemical composition described in Table 1 were smelted in a vacuum melting furnace. The obtained steel ingots were heated to 1200°C and were then hot rolled to give hot rolled sheets with a sheet thickness of 5 mm. The hot rolled sheets were annealed at 900°C, descaled by pickling, and subjected to repeated cold rolling, annealing and pickling. Thus, stainless steel sheets with a sheet thickness of 0.2 mm were produced.

Subsequently, the steel sheets were annealed, pretreated (by electrolytic treatment or acid immersion) under conditions described in Table 2, and acidized by being immersed in a pickling solution. The electrolytic treatment was carried out in a bath described in Table 2 at a solution temperature of 55°C and a current density of 2 A/dm$^2$ for a treatment time of 30 seconds. The acid immersion as the pretreatment was performed with a solution described in Table 2 at a solution temperature of 55°C for a treatment time of 30 seconds. The acidizing was carried out in a solution at a bath temperature for a time described in Table 2.

The stainless steels obtained above were tested to measure the contact resistance and were analyzed by XPS to identify the elements present on the outermost surface. Further, a durability test was performed and the contact resistance was measured in the same manner as the measurement before the durability test, thereby determining the increase in contact resistance. In the durability test, the sample was held in a pH 3 sulfuric acid solution for 24 hours under conditions of 800 mV vs. SHE and 80°C.

In the measurement of contact resistance, carbon paper CP120 manufactured by TORAY INDUSTRIES, INC. was used, and the resistance at the interface of the carbon paper CP120 and the steel in contact with each other under a load of 20 kGf/cm$^2$ was measured.

AXIS-HS manufactured by KRATOS was utilized in the XPS measurement. The measurement was performed with a monochromatized AlK$\alpha$ X-ray source, and the amounts (atomic %) of main components were determined using relative sensitivity factors included in the apparatus. Based on the results, fluorine was quantitatively determined, and the 2p peaks of Cr and Fe were separated into metallic peaks and other peaks. The ratio of these peaks was calculated to obtain information regarding the thickness of the film. In detail, the amounts (the atomic concentrations) of Cr and Fe were determined using relative sensitivity factors; further, the respective peaks were separated into metallic peaks and other peaks, and from the obtained results a ratio was calculated of the total of the atomic concentrations of Cr and Fe obtained from the film, namely, the total of the atomic concentrations of Cr and Fe in other than the metallic forms, to the total of the atomic concentrations of Cr and Fe obtained from the metal portion, namely, the total of the atomic concentrations of Cr and Fe in the metallic forms.

The measurements of the (Cr + Fe) in other than metallic forms/(Cr + Fe) in metallic forms ratio and of the contact resistance after the durability test were not carried out for those samples whose contact resistance before the durability test was above 10 mΩ·cm$^2$.

The results are described in Table 3.

[Table 1]

Table 1

| Steel No. | Components (mass%) | | | | | | | | | | | | | Remarks |
| --- | --- | --- | --- | --- | --- | --- | --- | --- | --- | --- | --- | --- | --- | --- |
| | C | N | Si | Mn | P | S | Cr | Ni | Mo | Cu | Nb | Al | Ti | |
| 1 | 0.0083 | 0.0051 | 0.18 | 0.20 | 0.026 | 0.002 | 29.5 | - | 1.96 | - | 0.11 | 0.01 | 0.12 | Inv. Ex. |
| 2 | 0.0079 | 0.0049 | 0.17 | 0.25 | 0.015 | 0.001 | 21.1 | - | - | 0.49 | - | 0.03 | 0.32 | Inv. Ex. |
| 3 | 0.0081 | 0.0043 | 0.22 | 0.45 | 0.025 | 0.003 | 18.1 | 8.2 | - | - | - | 0.05 | - | Inv. Ex. |

[Table 2]

Table 2

| Conditions | Pretreatment | | Acidizing | | |
| | Electrolytic treatment | Acid immersion | Bath | Temperature | Time |
|---|---|---|---|---|---|
| A | $H_2SO_4$ bath | - | $HNO_3$ 10%+HF3% | 55°C | 40 |
| B | ↓ | - | HF10% | 55°C | 40 |
| C | $Na_2SO_4$ bath | - | $HNO_3$ 10%+HF3% | 55°C | 40 |
| D | ↓ | - | ↓ | 45°C | 40 |
| E | ↓ | - | ↓ | 60°C | 40 |
| F | ↓ | - | ↓ | 55°C | 80 |
| G | ↓ | - | $HNO_3$ 5% + HF5% | 55°C | 40 |
| H | ↓ | - | HF10% | 45°C | 40 |
| I | ↓ | - | ↓ | 35°C | 40 |
| J | ↓ | - | ↓ | 45°C | 80 |
| K | ↓ | - | HF5% | 45°C | 40 |
| L | ↓ | - | ↓ | 35°C | 40 |
| M | ↓ | - | ↓ | 45°C | 80 |
| N | - | HCl(1+3) | $HNO_3$ 10%+HF3% | 55°C | 40 |
| O | - | ↓ | HF10% | 55°C | 40 |
| P | - | - | $HNO_3$ 10%+HF3% | 55°C | 40 |
| Q | - | - | F10% | 55°C | 40 |
| R | $H_2SO_4$ bath | - | - | - | - |
| S | $Na_2SO_4$ bath | - | - | - | - |
| T | - | HCl(1+3) | - | - | - |
| U | - | - | - | - | - |

[Table 3]

Table 3

| Test No. | Steel No. | Treatment | Results of XPS analysis of materials | | | Contact resistance before durability test | Increase in contact resistance after durability test | Remarks |
| | | | Detection of fluorine | (Cr+Fe) in other than metallic forms/(Cr+Fe) in metallic forms [Ratio of XPS Atomic Concentrations] | | ◎ : ≦ 5 ($m\Omega \cdot cm^2$) | ◎:≦10 ($m\Omega \cdot cm^2$) | |
| | | | | Not less than 3.0 | Not less than 4.0 | ○:≦10 ($m\Omega \cdot cm^2$) | ○:≦30 ($m\Omega \cdot cm^2$) | |
|---|---|---|---|---|---|---|---|---|
| 1 | 1 | C | ○ | × | × | ○ | × | Comp. Ex. |
| 2 | 1 | F | ○ | ○ | × | ○ | ○ | Inv. Ex. |
| 4 | 1 | H | ○ | ○ | × | ○ | ○ | Inv. Ex. |
| 3 | 1 | S | × | - | - | × | - | Comp. Ex. |

(continued)

| Test No. | Steel No. | Treatment | Results of XPS analysis of materials | | | Contact resistance before durability test ◎ : ≦ 5 (mΩ·cm²) ○:≦10 (mΩ·cm²) | Increase in contact resistance after durability test ◎:≦10 (mΩ·cm²) ○:≦30 (mΩ·cm²) | Remarks |
|---|---|---|---|---|---|---|---|---|
| | | | Detection of fluorine | (Cr+Fe) in other than metallic forms/(Cr+Fe) in metallic forms [Ratio of XPS Atomic Concentrations] | | | | |
| | | | | Not less than 3.0 | Not less than 4.0 | | | |
| 5 | 1 | U | × | - | - | × | - | Comp. Ex. |
| 6 | 2 | A | ○ | × | × | ○ | × | Comp. Ex. |
| 7 | 2 | B | ○ | ○ | × | ○ | ○ | Inv. Ex. |
| 8 | 2 | C | ○ | ○ | × | ○ | ○ | Inv. Ex. |
| 9 | 2 | D | ○ | ○ | × | ○ | ○ | Inv. Ex. |
| 10 | 2 | E | ○ | ○ | ○ | ◎ | ◎ | Inv. Ex. |
| 11 | 2 | F | ○ | ○ | ○ | ◎ | ◎ | Inv. Ex. |
| 12 | 2 | G | ○ | ○ | × | ○ | ○ | Inv. Ex. |
| 13 | 2 | H | ○ | ○ | × | ○ | ○ | Inv. Ex. |
| 14 | 2 | I | ○ | ○ | × | ○ | ○ | Inv. Ex. |
| 15 | 2 | J | ○ | ○ | ○ | ◎ | ◎ | Inv. Ex. |
| 16 | 2 | K | ○ | ○ | × | ○ | ○ | Inv. Ex. |
| 17 | 2 | L | ○ | × | × | × | - | Comp. Ex. |
| 18 | 2 | M | ○ | ○ | ○ | ◎ | ◎ | Inv. Ex. |
| 19 | 2 | N | ○ | ○ | ○ | ◎ | ◎ | Inv. Ex. |
| 20 | 2 | O | ○ | ○ | ○ | ◎ | ◎ | Inv. Ex. |
| 21 | 2 | P | ○ | ○ | × | ○ | ○ | Inv. Ex. |
| 22 | 2 | Q | ○ | ○ | × | ○ | ○ | Inv. Ex. |
| 23 | 2 | R | × | - | - | × | - | Comp. Ex. |
| 24 | 2 | S | × | - | - | × | - | Comp. Ex. |
| 25 | 2 | T | × | - | - | × | - | Comp. Ex. |
| 26 | 2 | U | × | - | - | × | - | Comp.Ex. |
| 27 | 3 | C | ○ | ○ | × | ○ | ○ | Inv. Ex. |
| 28 | 3 | D | ○ | ○ | × | ○ | ○ | Inv. Ex. |
| 29 | 3 | E | ○ | ○ | × | ○ | ○ | Inv. Ex. |
| 30 | 3 | F | ○ | ○ | ○ | ◎ | ◎ | Inv. Ex. |
| 31 | 3 | H | ○ | ○ | × | ○ | ○ | Inv. Ex. |
| 32 | 3 | I | ○ | × | × | × | - | Comp. Ex. |
| 33 | 3 | J | ○ | ○ | ○ | ◎ | ◎ | Inv. Ex. |

(continued)

| Test No. | Steel No. | Treatment | Results of XPS analysis of materials | | | Contact resistance before durability test ◎ : ≦ 5 (mΩ·cm²) ○:≦10 (mΩ·cm²) | Increase in contact resistance after durability test ◎:≦10 (mΩ·cm²) ○:≦30 (mΩ·cm²) | Remarks |
|---|---|---|---|---|---|---|---|---|
| | | | Detection of fluorine | (Cr+Fe) in other than metallic forms/(Cr+Fe) in metallic forms [Ratio of XPS Atomic Concentrations] | | | | |
| | | | | Not less than 3.0 | Not less than 4.0 | | | |
| 34 | 3 | S | × | - | - | × | - | Comp. Ex. |
| 35 | 3 | U | × | - | - | × | - | Comp. Ex. |

From Table 3, it has been demonstrated that Inventive Examples in which fluorine was detected and the (Cr + Fe) in other than metallic forms/(Cr + Fe) in metallic forms ratio ≥ 3.0 resulted in a contact resistance of not more than 10 mΩ·cm² and an increase in contact resistance of not more than 30 mΩ·cm². Further, it has been demonstrated that Inventive Examples in which fluorine was detected and the (Cr + Fe) in other than metallic forms/(Cr + Fe) in metallic forms ratio ≥ 4.0 resulted in an increase in contact resistance of not more than 10 mΩ·cm² and achieved a further enhancement in terms of contact resistance retaining characteristics.

EXAMPLE 2

Of the 0.2 mm thick stainless steel sheets used in EXAMPLE 1, the sheets of the steels Nos. 2 and 3 described in Table 1 were utilized. As a pretreatment, the steel sheets were electrolytically treated in a 3% sulfuric acid solution. The solution temperature was 55°C, the current density was 2 A/dm², and the treatment time was 30 seconds. The steel sheets were then acidized by being immersed in a solution mixture of 5% hydrofluoric acid and 1% nitric acid for the steel No. 2 and in a 5% hydrofluoric acid solution for the steel No. 3. The temperature of both the acid solutions was 55°C, and the immersion time was 40 seconds to 120 seconds. For comparison, samples were prepared without acid immersion. The surface of the obtained samples was analyzed by XPS to determine the presence or absence of fluorine and to obtain the (Cr + Fe) in other than metallic forms/(Cr + Fe) in metallic forms ratio, and was tested to measure the contact resistance. Further, a durability test was performed and the contact resistance was measured in the same manner as the measurement before the durability test, thereby determining the increase in contact resistance. These measurements and data analysis were carried out by the same methods as in EXAMPLE 1. In the durability test, the sample was held in a pH 3 sulfuric acid solution containing 0.1 ppm F ions for 20 hours under conditions of 800 mV vs. SHE and 80°C.
The results are described in Table 4.
[Table 4]

Table 4

| Test No. | Steel No. | Electrolytic treatment | Immersion time | Surface F concentration (at%) | Nonmetal/metal ratio* | Contact resistance before durability test (mΩ·cm$^2$) | Contact resistance after durability test (mΩ·cm$^2$) | Increase in contact resistance (mΩ·cm$^2$) | Remarks |
|---|---|---|---|---|---|---|---|---|---|
| 1 | 2 | Performed | - | 0.0 | 3.0 | 15.0 | - | - | Comp.Ex. |
| 2 | 2 | Performed | 40 | 3.7 | 1.9 | 11.4 | 76.6 | 65.2 | Comp. Ex. |
| 3 | 2 | Performed | 60 | 6.3 | 6.9 | 4.7 | 7.1 | 2.4 | Inv. Ex. |
| 4 | 2 | Performed | 120 | 5.1 | 4.0 | 5.2 | 8.3 | 3.1 | Inv. Ex. |
| 5 | 3 | Performed | - | 0.0 | 2.6 | 44.0 | - | - | Comp. Ex. |
| 6 | 3 | Performed | 40 | 0.5 | 2.2 | 13.0 | 61.1 | 48.1 | Comp. Ex. |
| 7 | 3 | Performed | 60 | 0.7 | 3.3 | 8.2 | 37.7 | 29.5 | Inv. Ex. |
| 8 | 3 | Performed | 120 | 1.2 | 3.7 | 4.1 | 9.5 | 5.4 | Inv. Ex. |
| * Cr and Fe | | | | | | | | | |

Under the conditions adopted in this EXAMPLE, an acid immersion time of 60 seconds or more allowed fluorine to be present on the steel and the (Cr + Fe) in other than metallic forms/(Cr + Fe) in metallic forms ratio to become not less than 3.0. In such examples, the contact resistance before the durability test was as low as not more than 10 m$\Omega\cdot$cm$^2$ and the increase in contact resistance after the durability test was not more than 30 m$\Omega\cdot$cm$^2$. Of the tests, the tests Nos. 3, 4 and 8 in which fluorine was detected and the (Cr + Fe) in other than metallic forms/(Cr + Fe) in metallic forms ratio was not less than 3.5 resulted in an increase in contact resistance of not more than 10 m$\Omega\cdot$cm$^2$ after the durability test. In particular, the tests Nos. 3 and 4 in which the ratio was 4.0 or above demonstrated a high performance in retaining the low contact resistance, with the increase in contact resistance being not more than 5 m$\Omega\cdot$cm$^2$. In the test No. 1, the (Cr + Fe) in other than metallic forms/(Cr + Fe) in metallic forms ratio was 3.0. However, the steel did not contain fluorine and consequently the contact resistance before the test was high (as a result of which the durability test was not performed). Although the steels in the tests Nos. 2 and 6 contained fluorine, the (Cr + Fe) in other than metallic forms/(Cr + Fe) in metallic forms ratio was below 3.0. Consequently, the contact resistance before the test was high and the increase in contact resistance after the durability test was large, indicating that these steels had poor performances.

Reference Signs List

1    MEMBRANE-ELECTRODE ASSEMBLY
2    GAS DIFFUSION LAYER
3    GAS DIFFUSION LAYER
4    SEPARATOR
5    SEPARATOR
6    AIR CHANNEL
7    HYDROGEN CHANNEL

**Claims**

1. A stainless steel for fuel cell separators wherein the stainless steel contains, by mass, C: not more than 0.03%, Si: not more than 1.0%, Mn: not more than 1.0%, S: not more than 0.01%, P: not more than 0.05%, Al: not more than 0.20%, N: not more than 0.03%, Cr: 16 to 40%, and one or more of Ni: not more than 20%, Cu: not more than 0.6% and Mo: not more than 2.5%, the balance being Fe and inevitable impurities, and
wherein according to X-ray photoelectron spectroscopy, the surface of the stainless steel contains fluorine and satisfies the following relation:

```
(Cr + Fe) in other than metallic forms/(Cr + Fe) in

metallic forms ≥ 3.0
```

wherein (Cr + Fe) in other than metallic forms indicates the total of atomic concentrations of Cr and Fe in other than the metallic forms calculated from data resulting from the separation of peaks of Cr and Fe into metallic peaks and peaks other than the metallic peaks, and (Cr + Fe) in metallic forms indicates the total of atomic concentrations of Cr and Fe in the metallic forms calculated from the data resulting from the separation of the peaks of Cr and Fe into metallic peaks and peaks other than the metallic peaks.

2. The stainless steel for fuel cell separators according to claim 1, wherein the stainless steel further contains not more than 1.0% by mass of a total of one or more of Nb, Ti and Zr.

# FIG. 1

# FIG. 2

Wide scan: 1(15-BC1)

Wide scan: 1(15-CC1)

# FIG. 3

# FIG. 4

# FIG. 5

<br>

**INTERNATIONAL SEARCH REPORT**

International application No.

PCT/JP2012/004736

A. CLASSIFICATION OF SUBJECT MATTER
*C22C38/00*(2006.01)i, *C22C38/44*(2006.01)i, *C22C38/50*(2006.01)i, *C23C22/34*
(2006.01)i, *C23F17/00*(2006.01)i, *C23G1/08*(2006.01)i, *C25F1/06*(2006.01)i,
*H01M8/02*(2006.01)n, *C23F1/00*(2006.01)n, *H01M8/10*(2006.01)n
According to International Patent Classification (IPC) or to both national classification and IPC

B. FIELDS SEARCHED

Minimum documentation searched (classification system followed by classification symbols)
C22C38/00, C22C38/44, C22C38/50, C23C22/34, C23F17/00, C23G1/08, C25F1/06,
H01M8/02, C23F1/00, H01M8/10

Documentation searched other than minimum documentation to the extent that such documents are included in the fields searched
    Jitsuyo Shinan Koho       1922-1996    Jitsuyo Shinan Toroku Koho    1996-2012
    Kokai Jitsuyo Shinan Koho   1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-13684 A (JFE Steel Corp.), 21 January 2010 (21.01.2010), claims 1, 2; paragraphs [0016] to [0023] (Family: none) | 1-2 |
| A | WO 2011/89730 A1 (JFE Steel Corp.), 28 July 2011 (28.07.2011), claims 1 to 4; paragraphs [0043] to [0053] (Family: none) | 1-2 |
| A | JP 2010-514930 A (Posco), 06 May 2010 (06.05.2010), claims 1 to 7 & US 2010/0132842 A1 & WO 2008/082162 A1 & DE 112007003189 T5 & KR 10-0836480 B1 & KR 10-2009-0066866 A & CN 101601158 A | 1-2 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
16 October, 2012 (16.10.12)

Date of mailing of the international search report
30 October, 2012 (30.10.12)

Name and mailing address of the ISA/
Japanese Patent Office

Authorized officer

Facsimile No.

Telephone No.

Form PCT/ISA/210 (second sheet) (July 2009)

| **INTERNATIONAL SEARCH REPORT** | International application No. |
|---|---|
| | PCT/JP2012/004736 |

C (Continuation).   DOCUMENTS CONSIDERED TO BE RELEVANT

| Category* | Citation of document, with indication, where appropriate, of the relevant passages | Relevant to claim No. |
|---|---|---|
| E,A | WO 2012/98689 A1  (JFE Steel Corp.),<br>26 July 2012 (26.07.2012),<br>claims 1 to 9<br>(Family: none) | 1-2 |

Form PCT/ISA/210 (continuation of second sheet) (July 2009)

**EP 2 738 277 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8180883 A
- JP 10228914 A
- JP 2000277133 A
- JP 2005302713 A